# EUROPEAN PATENT SPECIFICATION

(11) **EP 3 126 770 B1**
(45) Date of publication and mention of the grant of the patent: **01.08.2018**
(21) Application number: 15722267.0
(22) Date of filing: 02.04.2015
(51) Int. Cl.: F28D 9/00, F28D 21/00, F24F 12/00, F28F 21/06, F28F 9/02, F28D 9/02

(54) **RECUPERATOR, THE HEAT-EXCHANGING CHANNELS OF WHICH EXTEND TRANSVERSELY OF THE MAIN FLOW DIRECTION**
REKUPERATOR, DESSEN WÄRMETAUSCHERKANÄLE SICH QUER ZUR HAUPTSTRÖMUNGSRICHTUNG ERSTRECKEN
RÉCUPÉRATEUR, DONT LES CONDUITES D'ÉCHANGE THERMIQUE S'ÉTENDENT EN TRAVERS DU SENS D'ÉCOULEMENT PRINCIPAL

(30) Priority: 02.04.2014 NL 2012548
(43) Date of publication of application: 08.02.2017
(73) Proprietor: Level Holding B.V., 5691 GD Son (NL)
(72) Inventor: VELTKAMP, Wessel Bart, NL-5691 GD Son (NL); HOOGENDOORN, Peter, NL-5691 RE Son (NL)
(74) Representative: Patentwerk B.V.
(86) International application number: PCT/NL2015/050217
(87) International publication number: WO 2015/152725

(56) References cited:
- EP-A1- 0 548 604
- EP-A2- 2 568 229
- DE-A1-102012 004 900
- NL-C2- 1 000 706
- US-A- 4 042 018

## Description

The invention relates to a recuperator, comprising at least a first recuperator unit with heat-exchanging channels extending parallel to each other, a first header placed on a first side of the recuperator unit and having the form of a three-sided prism, a first surface of which connects to a first end of the heat-exchanging channels of the recuperator unit, a second header placed on the second side of the recuperator unit and having the form of a three-sided prism, a first surface of which connects to the second side of the heat-exchanging channels of the recuperator unit, supply ducts extending to a second surface of the first and the second header and discharge ducts extending from the third surface of the first and the second header, wherein the supply ducts and the discharge ducts extend transversely of the longitudinal direction of the heat-exchanging channels.

Such recuperators are generally known, inter alia from NL-C-1 000 706. In these recuperators the heat-exchanging channels extend substantially parallel to the main flow direction in the recuperator. Recuperators with a greater length than width in the main flow direction have a relatively great pressure drop, this requiring additional fan capacity. This reduces the net effectiveness of the recuperator.

In the housing and utility markets there is a need for a recuperator per room, preferably incorporated in the shell of the building. A recuperator can be placed for this purpose in a hole drilled in a wall or can be incorporated in a window frame. These applications result in a length-width ratio of 2 or more, while in the currently usual recuperators the ratio is -0.5. In order to achieve the effectiveness of 92% or more required for comfort in the case of these recuperators the pressure drop becomes too high at the required air flow rate, so that more powerful fans are used and the effectiveness decreases.

The object of the invention is to provide such a recuperator, wherein these drawbacks are obviated or reduced.

The invention provides for this purpose a recuperator of the above stated type, wherein the supply ducts and the discharge ducts extend at the sides of the headers lying opposite the recuperator units, the passage of the supply ducts decreases in the flow direction and wherein the passage of the discharge ducts increases in the flow direction.

In this configuration the supply and discharge ducts extend on either side of the combination of the recuperator units and the headers and transversely of the longitudinal direction of the heat-exchanging channels. Placing the heat-exchanging channels perpendicularly of the main flow direction reverses the ratio of length and width of the assembly of recuperator unit, headers and supply and discharge ducts so that the pressure drop is reduced, while the requirements in respect of comfort can still be met since after all more and shorter channels are connected in parallel. The supply to and discharge from the heat-exchanging channels does then have to take place such that the flow rate is distributed evenly over the heat-exchanging channels, this being achieved by said form of the supply and discharge ducts.

According to the invention the supply and discharge ducts extend in a plane extending transversely of the heat-exchanging channels. A first embodiment provides the measure that the supply and discharge ducts extend substantially parallel to the intersecting line between the second and the third surface of the headers. The recuperator units are usually assembled from stacked plates extending into the prismatic headers. These plates then extend transversely of the intersecting line between the first and the second surface of the prismatic headers. According to this embodiment the supply and discharge ducts then extend transversely of the plates. The capacity of the recuperator unit can then be increased by stacking more plates on each other. Since the supply and discharge ducts then extend parallel to the stacking direction, they can be easily brought into contact with all parts of the headers. Other production techniques are not otherwise precluded; it is thus possible to make use of recuperator units manufactured in other manner, for instance by extrusion or by injection moulding.

According to an alternative embodiment, the supply ducts and the discharge ducts extend substantially transversely of the intersecting line between the second and the third surface of the prismatic headers. This is the other technically applicable option for the direction of the supply and discharge ducts, although the principle option of oblique channels is not precluded.

In the case of recuperator units of the above stated type with a large width in the direction of the intersecting line between the second and the third surface of the headers, this would result in excessively wide supply and discharge ducts which are difficult to place in a housing. The width of these supply and discharge ducts becomes smaller when the recuperator is provided with at least a second recuperator unit which is connected to the same supply and discharge ducts. When use is made in this embodiment of a recuperator unit assembled from flat plates, the supply and discharge ducts then extend parallel to the plates as a result of the fact that the plates extend into the headers. In view of the usually limited width of the plates and the great length of the assembly of recuperator units, headers and supply and discharge ducts, different recuperator units will have to be connected successively and in parallel.

Preferably the recuperator is placed in a rectangular housing.

According to an alternative configuration, the recuperator unit has a round cross-section and extends between two concentric cylinders, wherein the channels extend radially relative to the cylinders, the first header is situated on the inner side of the recuperator unit, the second header is situated on the outer side of the recuperator unit, the supply and discharge ducts extend in the axial direction of the cylinders, one supply duct and one discharge duct extend on the inner side of the recuperator unit, and wherein one supply duct and one discharge duct extend on the outer side of the recuperator unit. This embodiment is particularly, though not exclusively, suitable for placing in round holes in walls.

An efficient configuration results when a substantially tubular distributor is arranged between the central supply duct and discharge duct on one hand and the heat-exchanging channels on the other, which distributor is divided into sections by means of internal extensions of walls extending between the heat-exchanging channels, and each of the sections is connected to the discharge duct or to the supply duct, and a substantially tubular distributor is arranged between the supply duct and discharge duct arranged on the periphery on the one hand and the heat-exchanging channels on the other, which distributor is divided into sections by means of extensions of walls extending between the heat-exchanging channels, and each of the sections is connected to the discharge duct or supply duct arranged on the periphery.

According to an attractive embodiment, the recuperator unit is provided with plates which extend parallel to each other and which separate channels of different sort and extend transversely of the intersecting line between the second and the third surface of the headers.

At least some of the number of plates are preferably provided with a profile which defines channels.

According to another preferred embodiment, the housing takes the form of a straight circular cylinder. This form of the housing can advantageously be combined with an array of heat-exchanging channels with a rectangular form and together with the headers space is then created there for the supply and discharge ducts and possibly for one or more bypass channels.

When the central axis of the recuperator unit extends at an angle to the central axis of the cylindrical housing, it is easy to obtain a configuration wherein the passage of the supply ducts decreases in the flow direction and the passage of the discharge ducts increases in the flow direction.

Recuperators form condensation when the temperature of the one medium is lower than the saturation temperature of the other medium. If the temperature of the primary medium lies below freezing point, ice can then also be formed. In the case of a decentralized recuperator per room in the housing or utility market it is technically difficult to discharge condensation and to prevent formation of ice. In order to remain within the comfort range in the room moisture has to be recovered at low outdoor temperature, and in the case of high outdoor temperature and humidity the moisture from outside has to be relinquished to the outgoing indoor air flow. The above requirements can be met by cyclical alternation of the flow in the counterflow channels of the two media. The condensation and ice formed in the one (secondary) medium is then evaporated and sublimated in the other (primary) medium. A further embodiment provides for this purpose the measure that a controllable alternating valve is arranged in the housing on either side of the recuperator unit and connected for repetitively and simultaneously alternating the inlet channel and the outlet channel. The recuperator hereby becomes suitable for recovering latent heat.

The valves can be embodied in diverse ways. It is thus possible to make use of slide valves, although it is recommended that the alternating valves are each provided with a fixedly arranged valve seat provided with openings, which openings are connected to the supply and discharge ducts, and with a rotatable disc connecting to the valve seat. The valves can thus be rotated individually though simultaneously. It is likewise possible to rotate the assembly of heat-exchanging channels with the associated supply and discharge ducts in its entirety. The advantage relative to the enthalpy recuperator per se forming part of the prior art is that fewer valves are necessary, that the seal is simpler, the flow resistance lower and the switching time shorter. If the moisture production in the indoor space is greater than the amount of moisture which cannot be recovered, the valves can be connected asynchronously, whereby condensation moisture in the recuperator can be discharged.

It must be possible to switch off recuperation when the heat production indoors is sufficient or is more than necessary to keep the space at temperature, and the outdoor temperature is lower than the indoor temperature. It is also attractive to cool the space with outside air at night when a cooling demand is anticipated during the day. These requirements can be met with the same rotating valves (or rotating recuperator) as those for the enthalpy recuperation. It is recommended for this purpose that at least one bypass channel is arranged in the housing and the bypass channel is connected to openings arranged in the valve seats.

It may be desirable to close the recuperator, for instance in the case of calamities. A relevant embodiment provides for this purpose the measure that the valve seat is provided with closed parts and the valve discs are movable into a position in which the openings arranged in the valve discs are closed by closed parts of the valve seat.

In order to keep the seals as leakage-free as possible, it is preferred that the valve discs are movable in axial direction and that the recuperator is provided with a control member configured to move the valve in axial direction away from the valve seat prior to a change in the position of the valve and to move the valve toward the valve seat after a change in the position of the valve. The seals are now after all only in abutting contact and not in sliding contact.

In order to provide more options it is recommended that the rotatable valves are provided with an outward extending, substantially cylinder jacket-like wall part which connects to the valve disc and is co-rotatable with the valve disc, that the valve seats are each connected to a substantially cylinder jacket-like fixed wall part which is in contact with the associated rotatable wall part, that in both wall parts openings are arranged which, depending on the position of the valve disc, can be brought into overlap and that the openings arranged in the fixed wall part are connectable to the surrounding area or to the indoor space.

In order to facilitate the axial movement of the valves, particularly as a result of the seals, it is recommended that the substantially cylindrical part of the rotatable valves and the parts of the housing connecting thereto take a slightly conical form.

The housing is preferably configured to form part of a window frame. A considerable space-saving can hereby be achieved, while the option is provided of placing the recuperator together with the window frame.

In order to reduce flow losses during the change in direction caused by the invention it is attractive for the plates to be provided with guide means for guiding the change in direction of the airflows entering and exiting the channels.

The plates are preferably provided on at least one side with a hydrophilic layer, such as a layer of SiO₂. The capillary action of the surface tension is hereby increased and the moistening improved.

In homes any breaches in the shell must have sufficient sound damping, so that the required sound level is achieved in the home. The fan for the exhaust air is preferably placed indoors in order to prevent formation of ice in the fan at very low outdoor temperatures. The fan noise must be low and, if necessary, damped. The connection between recuperator and wall has to be airtight and sound-damping. The sound damping is usually achieved by damping the recuperator itself, wherein the counterflow channels lie transversely of the axis of the breach in the shell and outside noise can only reach the indoor space via a labyrinth. Where this damping is not sufficient, sound-damping material can be applied in the inner and outer gratings, preferably in the form of a flexible seal. The dynamic pressure on the inflow side during inflow into the heat-exchanging channels has a sign opposite to that on the outflow side, so that the static pressure drop over the outflow channel is greater than that over the inflow channel. This difference causes a non-uniform flow through the channels over the longitudinal axis of the recuperator. This difference is reduced by making the cross-sectional variation of inflow and outflow channels asymmetrical.

The invention will be elucidated hereinbelow with reference to the accompanying figures, in which:
Figure 1 is a schematic perspective view of plates and heat-exchanging channels formed by the plates in a prior art configuration;
Figure 2 is a schematic perspective view of plates and heat-exchanging channels formed by the plates in a first configuration according to the invention;
Figure 3 is a schematic perspective view of plates and heat-exchanging channels formed by the plates in a second configuration according to the invention;
Figure 4 is a schematic perspective view of a recuperator with channels according to a third configuration according to the invention;
Figure 5 is a schematic perspective view of a recuperator with channels according to a fourth configuration according to the invention;
Figure 6 is a schematic perspective view of the positioning of a recuperator in a round housing;
Figure 7 is a schematic perspective view of the positioning of a recuperator in a configuration with insulation of cold channels;
Figure 8 is a schematic perspective view of a recuperator with rotating valves which is placed obliquely in a round hole in a wall, with flows entering and exiting axially;
Figure 9 is a schematic representation of the position of the valves in a first option of the recuperator shown in figure 8;
Figure 10 is a schematic perspective view of a recuperator with rotating valves which is placed obliquely in a round hole in a wall, with flows entering and exiting axially;
Figure 11 is a schematic representation of the position of the valves in a second option of the axial-axial inflow and outflow;
Figure 12 is a schematic perspective view of a seal of the valve on the tube and recuperator with mechanism for preventing friction during rotation;
Figure 13 shows a configuration with a single valve;
Figure 14 shows a configuration with axial and radial inflow and outflow option 1;
Figure 15 is a schematic representation of the position of the valves in option 1 of the axial-radial inflow and outflow;
Figure 16 is a schematic representation of the position of the valves in option 2 of the axial-radial inflow and outflow;
Figure 17 is a schematic representation of the position of the valves in option 3 of the axial-radial inflow and outflow;
Figure 18 is a schematic representation of the position of the valves in option 4 of the axial-radial inflow and outflow;
Figure 19 shows sealing of the axial-radial valves;
Figure 20 shows an enthalpy recuperator in a window frame; and
Figure 21 shows a cross-section of recuperator and housing with therein the thickened portion of the tube and the vanes at the inflow and outflow of the heat-exchanging channels.

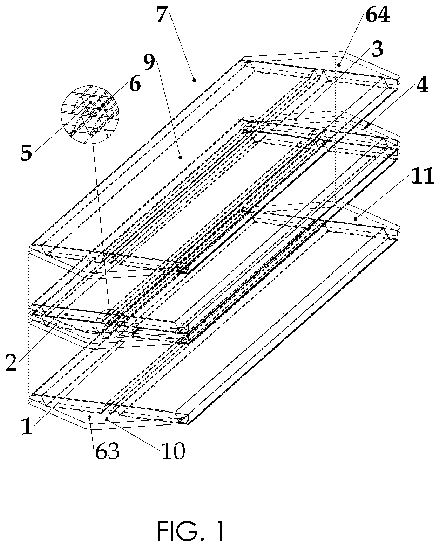

Figure 1 shows schematically a limited number of plates 9 of a prior art recuperator 7 which is dimensioned for placing in a passage with a diameter of 150 mm in a wall with a thickness of 300 mm. For the sake of simplicity the housing of the recuperator is not shown. Plates 9 close heat-exchanging channels of respective first and second sorts 5 and 6. The heat-exchanging channels of the two sorts 5, 6 are separated by plates 9. Plates 9 can all be corrugated, although it is also possible for plates 9 to be alternately corrugated and flat. Plates 9 continue outside the actual heat-exchanging channels 5, 6 into so-called header plates 10, 11. The mutually stacked header plates 10, 11 form headers 63, 64 on either side of the recuperator unit. In the present application headers 63, 64 have a triangular form and the heat-exchanging channels 5 of the first sort debouch in a first surface of headers 63, 64 and the heat-exchanging channels of the second sort 6 debouch in a second surface of headers 63, 64. Header 63 has on the right an opening which connects to a channel 1 and through which indoor air flows into the recuperator to channels 5 of the first sort, and on the left an opening which connects to channel 2 and through which air flows in from channels 6 of the second sort. Header 64 has on the left an opening which connects to a channel 3 and through which air from channels 5 of the first sort exits the recuperator to the outside and on the right an opening which connects to a channel 4 and through which outside air flows to channels 6 of the second sort.

Because channels 5 of the first sort and those 6 of the second sort are intimately coupled thermally to each other, heat transfer takes place between the gas flows flowing through channels 5, 6 while a separation between the gas flows is maintained. It will be apparent from the shown configuration that channels 5, 6 extend in the longitudinal direction of recuperator 7 and are thus relatively long; they are considerably longer than the width or the height of recuperator 7, whereby the flow resistance is relatively great. Such recuperators are known from the prior art.

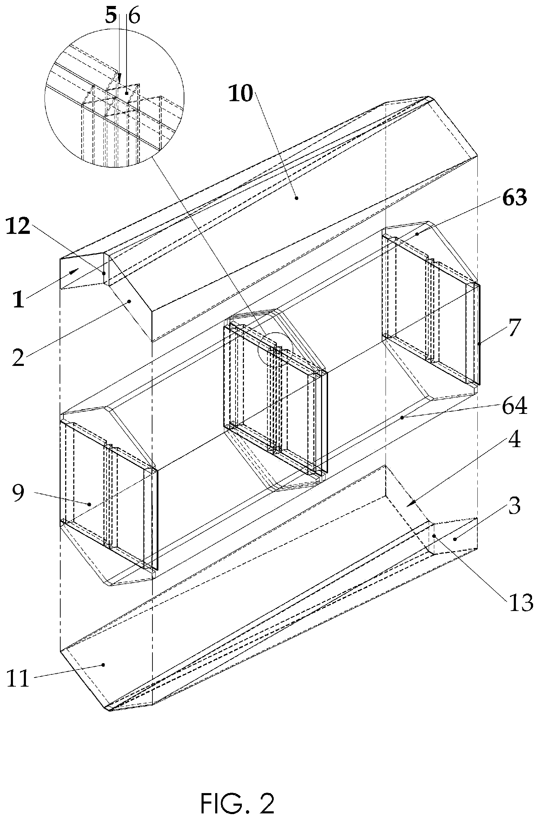

Figure 2 shows in the same way as figure 1 the configuration of a recuperator 7 according to the invention. This recuperator is also constructed from plates 9 which define heat-exchanging channels 5, 6. The detail view here shows the configuration of plates 9 and the heat-exchanging channels 5, 6. Plates 9 extend here perpendicularly of the longitudinal direction of the housing of the recuperator and thereby substantially of the main flow direction. Plates 9, and thereby channels 5, 6, are therefore considerably shorter than those in the prior art recuperator shown in figure 1, and the number of channels 5, 6 is therefore considerably greater. The recuperator according to the invention also has triangular prismatic headers 63, 64. This configuration requires that supply and discharge ducts connecting to headers 63, 64 extend over the length of the recuperator.

Figure 2 also shows a supply duct 1 extending from indoors to the recuperator and connecting to the left-hand surface of upper header 63, a discharge duct 3 extending outside from the recuperator and connecting to the right-hand surface of lower header 64, a supply duct 4 extending from the outside to the recuperator and connecting to the left-hand surface of lower header 64 and a discharge duct 2 extending indoors from the recuperator and connecting to the right-hand surface of upper header 63. Supply ducts 1, 4 have a cross-sectional area decreasing in the flow direction and discharge ducts 2, 3 have a cross-sectional area increasing in the flow direction so that the flow speed of the medium in the supply and discharge ducts is as far as possible always the same. Supply duct 1 and the adjoining discharge duct 2 are separated by a baffle 12, and supply duct 4 and discharge duct 3 are separated by a baffle 13.

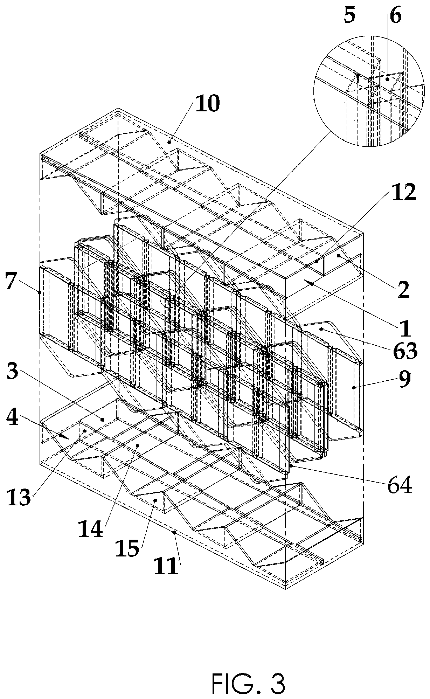

Figure 3 shows schematically a second embodiment of the invention. Plates 9 extend parallel here to the main flow direction, or the longitudinal direction, of recuperator 7 while the heat-exchanging channels 5, 6 extend transversely of the longitudinal direction thereof as in the first embodiment. Since plates 9 generally have a width smaller than the length of recuperator 7, a number of plates 9 is placed mutually in line. In other words, a number of recuperator elements are placed successively in the recuperator. Four of these recuperator elements are present in the shown embodiment. Each of these has on its upper and underside a respective prismatic header 63, 64. At variance with the first embodiment however, the axis of symmetry of these headers 63, 64 extends transversely of the longitudinal axis of the recuperator. The connection of the supply and discharge ducts is therefore more complicated than in the first embodiment. As in the first embodiment, two supply ducts 1, 4 and two discharge ducts 2, 3 are present which are likewise separated by a respective baffle 12, 13, although the different headers are also mutually separated by transverse baffles 14 which connect to baffles 12, 13 and which extend transversely of the longitudinal direction of recuperator 7. Separating baffles 15 extending transversely of the direction of heat-exchanging channels 5, 6, in each case over half the width of a header 10, 11, separate the ingoing and outgoing airflows. These separating baffles 15 are placed in a checkerboard pattern. In this second embodiment of the invention the average cross-sectional area of the supply ducts also decreases in the flow direction and the average cross-sectional area of the discharge ducts increases in the flow direction, albeit in less regular manner than in the first embodiment.

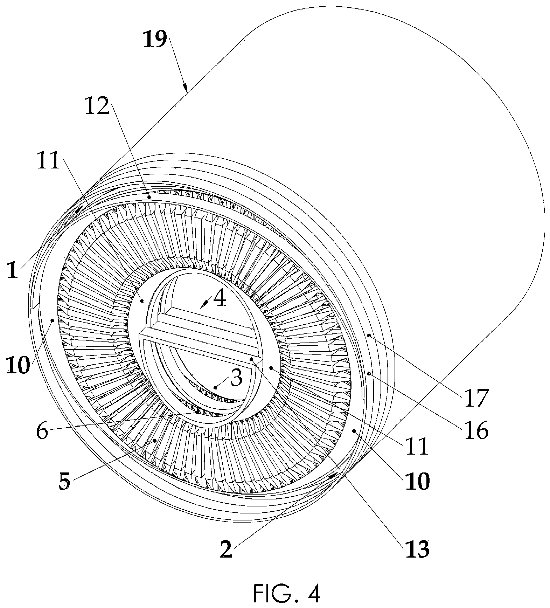

Figure 4 shows a third configuration wherein heat-exchanging channels 5, 6 extend in radial direction perpendicularly of the main flow direction and are placed together in the form of a ring. Heat-exchanging channels 5, 6 have a width increasing with the radius, whereby the flow remains in the entry zone over the whole channel length. This increases the heat transfer, but also the pressure drop.

In the interior of the array of heat-exchanging channels 5, 6 arranged in the form of a ring a supply duct 4 and a discharge duct 3 are formed by placing a baffle 13 extending between the two channels. A tubular distributor which fulfils the function of header is placed between channels 3, 4 on the one hand and the heat-exchanging channels on the other. Plates 9, between which the heat-exchanging channels 5, 6 are formed, extend here in radial direction in this tubular distributor as far as supply duct 4 and discharge duct 3, and here form plate parts 11. The spaces between these plate parts 11 are alternately connected to discharge duct 3 or to supply duct 4. The common outer wall 65 of supply duct 4 and discharge duct 3 is therefore interrupted alternately on the underside and on the upper side so that supply duct 4 is connected in each case to every second space between plate parts 11, and discharge duct 3 is connected in each case to the remaining spaces between plate parts 11.

Placed on the outer side of the heat-exchanging channels 5,6 arranged in the form of a ring is an elliptically shaped baffle 12, so that a supply duct 1 and a discharge duct 2 are also created here. The air from the room flows via channel 1 to the space between plates 16 and 17 through heat-exchanging channel 6 and then to the outside via channel 3. The air from outside flows via channel 4 to heat-exchanging channel 5 and via channel 2 to the room. Walls 16, 17 are preferably of the same form, wherein each successive surface is rotated axially through 180° relative to the adjacent wall. Injection moulding of these components and connection of the sealing surfaces by means of for instance ultrasonic welding are then possible.

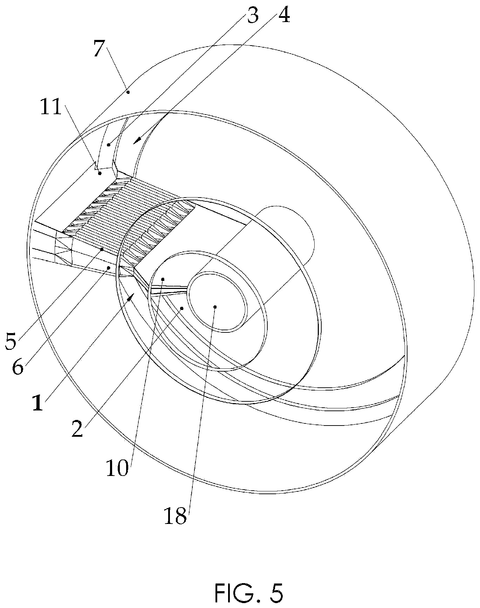

According to a variant of this embodiment, the heat-exchanging channels 5, 6 extend axially. This configuration is shown in figure 5, wherein only a segment of two heat-exchanging channels 5, 6 is shown for the sake of clarity. Since the plates of finite thickness cannot run as far as the centre, the central space is used as bypass channel 18, the function of which will be elucidated below. The air coming from the indoor space flows via annular channel 1 to the space between header plates 10 and then via heat-exchanging channels 5 to the space between header plates 11 and via annular channel 3 to the outside. The air coming from outside flows via annular channel 4 to the space between header plates 11, via heat-exchanging channels 6 to the space between header plates 10 and via annular channel 2 to the room. The inner and outer diameters of channels 1, 2, 3, 4 have to be chosen such that the pressure drop in headers 10, 11 is mainly equal. Less pressure drop and more heat-exchanging surface area can be obtained by making header surfaces 10, 11 triangular, wherein the header tapers from the inflow and outflow to a height of zero on the other side.

As already elucidated above, the recuperator according to the invention is particularly suitable for application in a single space. It is then recommended that the recuperator is placed in the wall. A round hole has to be drilled for this purpose in an outer wall. Usually a hole is drilled with a diameter of 150 mm and the wall has a thickness of 300 mm. The hexagonal prismatic housing of recuperator 7 is then placed in the hole, wherein the array of heat-exchanging channels preferably extends obliquely in the longitudinal direction of the circular cylindrical housing, whereby space is automatically created for supply and discharge ducts. Space for channels, such as bypass channels, is also created at the sides of the recuperator inside the housing. Control equipment can also be accommodated in this space.

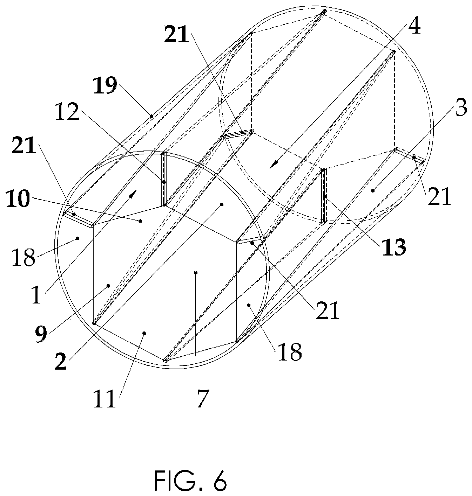

Figure 6 shows such an embodiment in a circular cylindrical housing 19. The array 20 of heat-exchanging channels 5, 6 with the configuration of a hexagonal prism according to the first embodiment is placed in housing 19 in an inclining position. The two triangular prismatic headers 10, 11 are here placed connecting to the substantially rectangular array 20 of heat-exchanging channels 5, 6, and supply and discharge ducts 1-4 are arranged. These supply and discharge ducts 1-4 are all bounded by the respective surface of header 10, 11, housing 19 and baffles 12, 13. Also present are four baffles 21 which extend in substantially radial direction between headers 10, 11 and housing 19 and which further bound the supply and discharge ducts 1-4. Formed between the pairs of baffles 21 are secondary channels 18 which are not essential for the primary function of the recuperator, so that they can be used as bypass channel or as space for placing equipment.

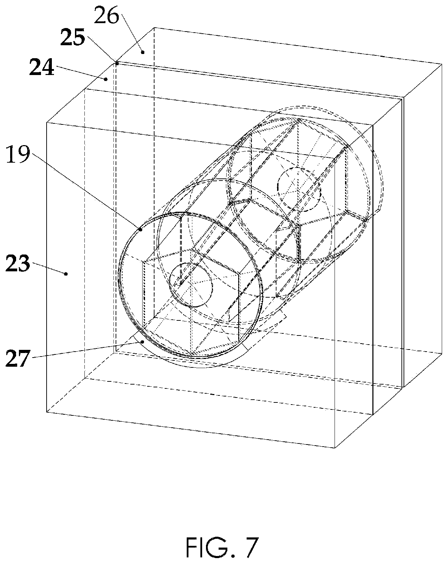

A drawback of the thus formed channels when placed in a hole arranged in an outer wall is that the cold air coming from outside is carried as far as the inner cavity wall 23, whereby the inner cavity wall 23 can cool and fall below the condensation point, which results in heat loss and possibly in the forming of a wet patch. Figure 7 shows an embodiment wherein the supply duct 4 coming from outside is insulated. Figure 7 shows the inner cavity wall 23, insulating layer 24, ventilation gap 25 and outer cavity wall 26. An insulating layer 27 is arranged on the underside of housing 19, whereby the above stated drawbacks are avoided.

The warm supply and discharge ducts 2, 3 can also heat the outer cavity wall 26. This can also be insulated, although the heat loss is so small that it is not usually deemed necessary to apply insulation for this purpose. If a larger hole in the wall is not a problem, the pipe can be enclosed by a layer of insulating material, for instance stiff foam.

For the purpose of maintaining comfort in the indoor space moisture transfer between the outgoing and incoming airflow is necessary, this being achieved by periodically alternating the heat-exchanging channels of these airflows without changing in the external airflows themselves. Accordingly, to a preferred embodiment, valves are arranged on the outer and inner side of the recuperator here having the configuration of an enthalpy recuperator. These valves can be controlled to open and close so as to thus realize the alternation of the channels. For the valves it is attractive to make use of valves with a round configuration. This makes it possible to alternate the airflows in the recuperator by rotating the valves relative to the recuperator.

In a large number of cases it is possible to suffice with four different positions of the valves, these being: a first and a second position, which are taken up alternately during normal use for the purpose of enthalpy recuperation; a bypass position so as not to recover heat, and a closed position of the recuperator in the case of calamities or when there is no wish for ventilation.

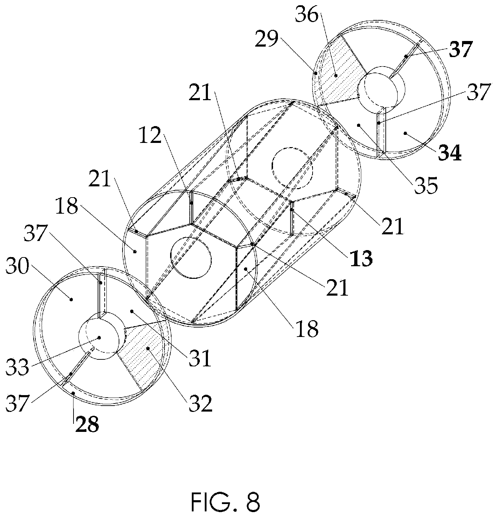

Figure 8 shows a further embodiment wherein round, rotatable valves 28, 29 are placed on both sides of the recuperator. These valves 28, 29 are configured for axial entry and exit of the airflows. Valve 28 is subdivided into four axial segments, three of which are numbered 30, 31, 32, and a central segment 33. Valve 29 is subdivided into four axial segments, three of which are numbered 34, 35, 36, and a central segment 33. Axial segments 30, 31 and 34, 35 are open and the axial radial segments 32, 36 are closed, as are both central segments 33. Open segment 30 of valve 28 is connected to the airflow from the room, open segment 31 of valve 28 is connected to the airflow to the room, open segment 34 of rotating valve 29 is connected to the airflow to the outside, open segment 35 of valve 29 is connected to the airflow from the outside. The external channels and fans co-rotate with the associated valve. Figure 8 shows the valves in the second position.

As already elucidated with reference to figure 6, four supply and discharge ducts 1, 2, 3, 4 and two bypass channels 18 are present in housing 19 of the recuperator. In the embodiment shown in figure 8 the valves 28, 29 are identical.

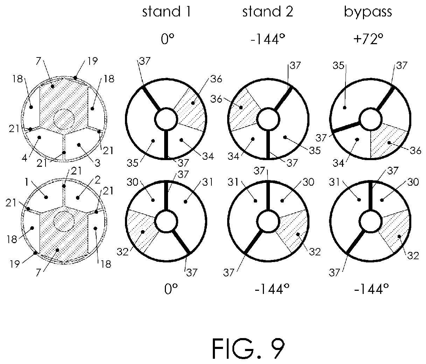

The different positions of valves 28, 29 are shown schematically in figures 9. The figures in the left-hand column here show the end surfaces of recuperator 7 and the subsequent columns show the relevant valve in the above elucidated positions. The upper series of figures shows the end surface and valve 29 of the recuperator on the outer side and the lower series of figures shows the end surface and valve 28 on the inner side. Each of the figures shows the view or cross-section as seen from the inside.

The figures in the second column show the first position of valves 28, 29. This shows how the discharge air from the dwelling flows through open segment 30 of valve 28 to channel 1 and the supply air to the dwelling flows from channel 2 via an open segment 31. The outside air flows through channel 4 to the recuperator via an open segment 35. The used air from the dwelling leaves the recuperator via channel 3 and an open segment 34. This is the first position of the enthalpy recovery.

The figures in the third column of figure 9 show the second position of valves 28, 29. Valve 28 on the inner side has been rotated two segments (-144°) relative to the first position, whereby the supply air from the dwelling flows via open segment 31 to channel 1 and flows via open segment 30 from channel 2 out of the room. Valve 29 on the outer side is also rotated two segments (-144°) relative to the first position. The outside air is supplied via open segment 35 to channel 3 and the air from channel 4 is carried outside via open segment 34. The flows inside the actual recuperator are alternated here so that ice and condensation formed in the heat-exchanging channels 5, 6 in the previous position sublimates and evaporates.

The third position or the bypass position is shown in the right-hand column of figure 9. Valve 28 is further rotated two segment parts (-144°) relative to the first position, whereby the air from indoors flows through segment 30 to channel 2 and the air from bypass channel 18 flows indoors through segment 31. Valve 29 has been rotated one segment relative to the first position 1 (72°) as seen from the same side as valve 28. The outside air is carried through segment 35 to bypass channel 18 and the flow exiting channel 4 flows through segment 34 to the outside. The flow from outside to inside hereby passes through the recuperator via bypass channel 18, while the flow from inside to outside moves through the recuperator but cannot absorb any heat, since there is no flow on the other side of the recuperator. With this configuration of the valves the recuperator cannot be closed.

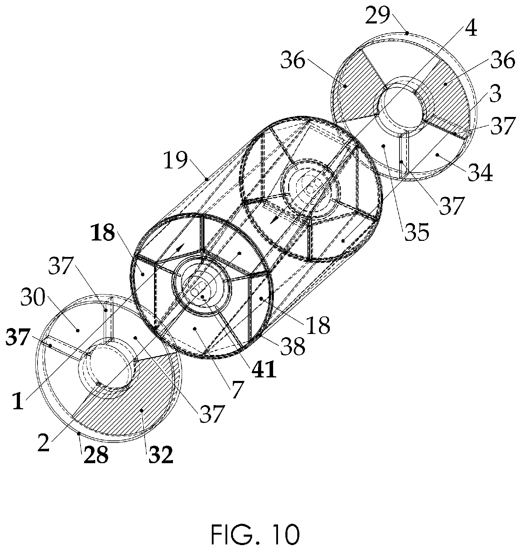

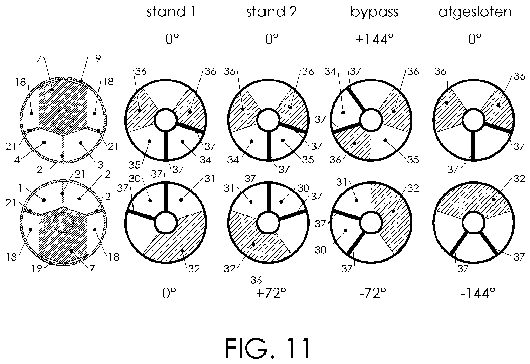

As elucidated with reference to figures 10 and 11, it is also possible to close the recuperator in a fourth position by reducing to one segment, close to valve 28, the segment 30 through which the air from indoors flows into the recuperator and by increasing to two segments 32 the closed part in the segment where the air flows inside from the recuperator, and by reducing to one segment 34, close to valve 29, the segment where the air from outside flows to the recuperator and by increasing to two segments 36 the closed part in the segment where the air flows to the outside from the recuperator.

Figure 11 also shows in the first column the views of the end walls and in the other columns the views of valves 28, 29. Figure 10 and the second column of figure 11 show the first position of valves 28, 29. The discharge air from the dwelling to the recuperator flows through an open segment 30 to channel 1 and leaves the recuperator through channel 3 and open segment 34. The air from outside flows via open segment 35 to channel 4 of and leaves the recuperator through channel 2 and flows to the dwelling through open segment 31.

The second position of valves 28, 29 is shown in the third column of figure 11. Valve 28 has been rotated one segment (+ 72°) relative to position 1 and valve 29 has not been rotated. Indoor air flows via an open segment 30 of valve 28 into channel 2 and exits the recuperator through channel 4 via open segment 35 of valve 29 to the outside. Air from outside flows via open segment 35 into channel 3 of the recuperator and the airflow from channel 1 enters via an open segment 31. The flows have now been alternated relative to position 1. On the outer side the fresh and discharge air therefore flows through a different segment than in position 1. This implies that the fans have to be arranged in the indoor space because, in the case of one fan indoors and the other one outdoors, they are connected to each other via one channel and act counter to each other, while the other channel has no fan.

The third position of the valves is shown in the fourth column of figure 11. Valve 28 has been rotated one segment (-72°) counter-clockwise relative to position 1 and valve 29 has been rotated two segments (144°) clockwise. Indoor air flows via an open segment 30 of valve 28 to the left-hand bypass channel 18 and exits the recuperator via open segment 34 of valve 29 to the outside. Air from outside enters channel 3 via open segment 35 of valve 29 and the air exits channel 1 to indoors via open segment 31 of valve 28. The outgoing air passes through the recuperator and the fresh air flows via the recuperator, but no heat is transferred since there is no flow on the other side.

Finally, the fifth column of figure 11 shows the fourth position of the valves. Valve 28 has been rotated two segments (-144°) counter-clockwise relative to the first position, while valve 29 has not been rotated relative to the first position. The two closed segments 32 close the access to channels 1 and 2. Bypass channels 18 are open on the side of valve 28. The two closed segments 36 of valve 29 close bypass channels 18. All channels are closed in this valve position so that no air can be exchanged between inside and outside.

Valves 28 and 29 are preferably driven individually by motors 41, which can be accommodated in central segments 33 of the valves.

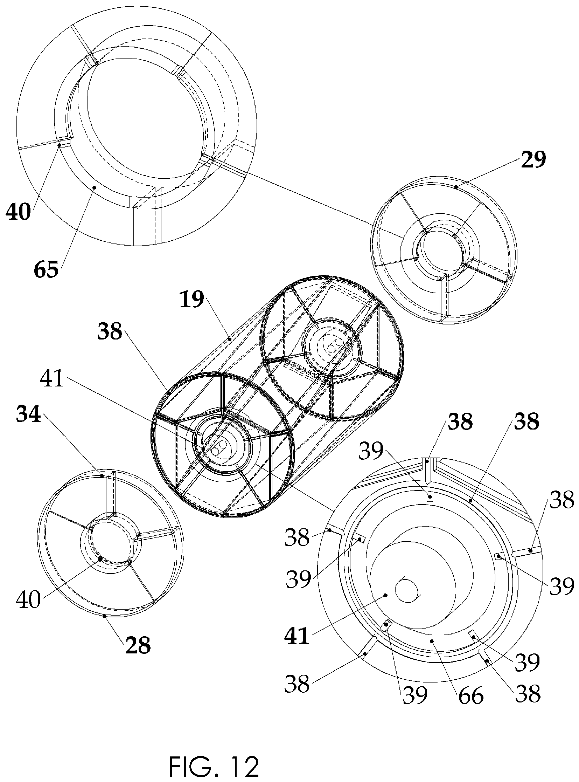

In order to prevent leakage the seal between baffles 37 and outer wall of valves 28, 29, housing 19 and the associated parts of the recuperator has to be continuous. Sealing on the plane perpendicularly of the axis of rotation between the valve and the tube with baffles and recuperator is not precluded, but requires great dimensional accuracy. An improvement is possible by applying an O-ring 38 or a similar seal in a groove following the sealing line in combination with a spring, which makes the valve compress the seal. In order to eliminate the friction with the seal during the rotation, the valve is moved in axial direction by having it run over a radial cam track (65, 66), wherein the valve is pressed onto the seal in the five rest positions and, outside these positions, is raised axially such that there is no further contact with the seal, as shown in figure 12. The seal is planar and the lifting movement of the valve is perpendicular to this plane, so that a very good seal can be realized.

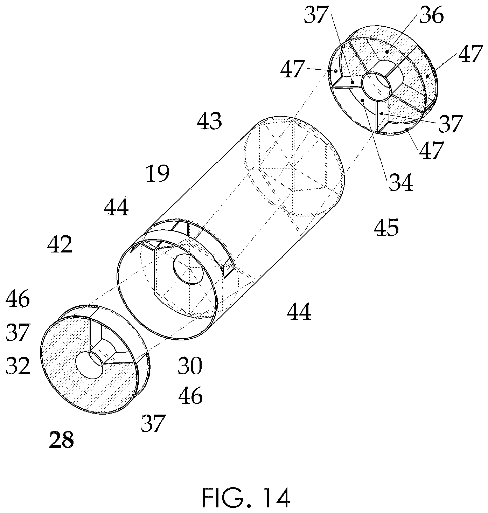

In the above elucidated embodiment with axial inflow and outflow the fans and the channels on the inner side and the outer side co-rotate with the valve. This can be a drawback in some applications. By allowing the air to flow in and out both axially and radially as shown in figure 14, an embodiment is obtained wherein the channels and the fans can be stationary. The housing of the recuperator is provided on both sides with an extension 42, 43 in which ports 44, 45 for radial inflow and outflow are arranged. Valves 28, 29 are provided with a collar which extends parallel to the extension and in which are arranged ports 46, 47 which can be brought into overlap with ports 44, 45. As in the foregoing embodiments, valves 28, 29 are each divided into segments by baffles 37. The segment of the valve which is parallel to the cover of the recuperator is open or closed.

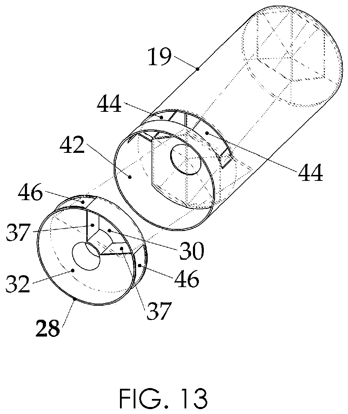

Another embodiment has one valve, valve 28, as shown in figure 13. The housing of the recuperator is provided with an extension 42 in which port 44 for radial inflow and outflow is arranged. Valve 28 is provided with a collar which extends parallel to the extension and in which are arranged ports 46 which can be brought into overlap with port 44. As in the foregoing embodiments, valve 28 is divided into segments by baffles 37. The segment of the valve which is parallel to the cover of the recuperator is open or closed.

Within the above elucidated preconditions the present invention provides four different secondary embodiments:
- A first secondary embodiment with two identical valves and on either side two ports which are the same, wherein the movement of valves is independent and wherein the fans can be placed on both sides of the recuperator.
- A second secondary embodiment with two identical valves and two ports on one side and three ports on another side, wherein the valves are not coupled and the fans can be placed on both sides or on a single side.
- A third secondary embodiment with two different valves and two ports on one side and three ports on another side, wherein the movement of valves is independent and the fans are placed on both sides or on one side.
- A fourth secondary embodiment with one valve and two ports on one side, wherein both fans are placed on the side of the valve.

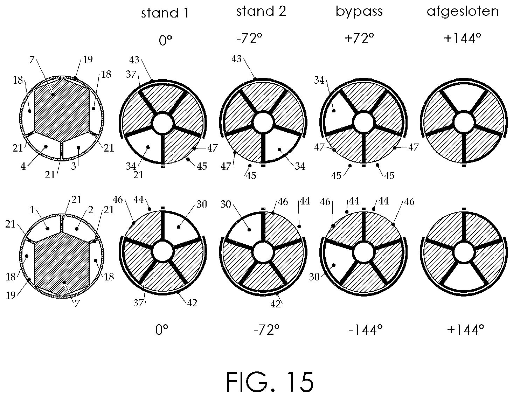

Figure 15 shows similarly to figures 9 and 11 the first embodiment in the first position in the second column. The flow from inside to outside moves axially via open segment 30 of valve 28 to channel 2 of the recuperator and exits the recuperator axially through open segment 34 of valve 29 via channel 4. The flow from outside to inside moves radially via the open port 45 of the extension and the radial open port 47 of valve 29 to channel 3 of the recuperator and exits the recuperator through channel 1 via an open segment 46 of valve 28 and port 44 of the extension.

In the second position valves 28 and 29 are both rotated one segment counter-clockwise relative to position 1. The flow from inside to outside moves axially via open segment 30 of valve 28 to channel 1 of the recuperator and exits the recuperator axially through open segment 34 of valve 29 via channel 3. The flow from outside to inside moves radially via port 45 in the extension and open port 47 of valve 29 to channel 4 of the recuperator and exits the recuperator through channel 2 radially via open port 46 of valve 28 and radially via port 44 of the extension.

In the third position, the bypass position, valve 28 has been rotated 144° counter-clockwise relative to position 1 and valve 29 has been rotated 72° clockwise. The flow from inside to outside moves axially via open segment 30 of valve 28 to the left-hand bypass channel 18, exits this channel axially through open segment 34 of valve 29. The flow from outside to inside moves radially via ports 45 of the extension and open ports 47 of valve 29 to channels 4 and 3 of the recuperator and exits the recuperator radially through channels 1 and 2 via radial ports 46 of valve 28. This embodiment uses the two heat-exchanging channels 5, 6 in parallel, whereby the pressure drop is halved.

In the fourth position, the closed position, valve 28 has been rotated 144° clockwise relative to position 1 and valve 29 has also been rotated 144° clockwise. Since channels 1 and 2 on the inner side as well as channel 3 on the outer side are closed here, no air can move through the recuperator. The two bypass channels 18 are also closed on both sides.

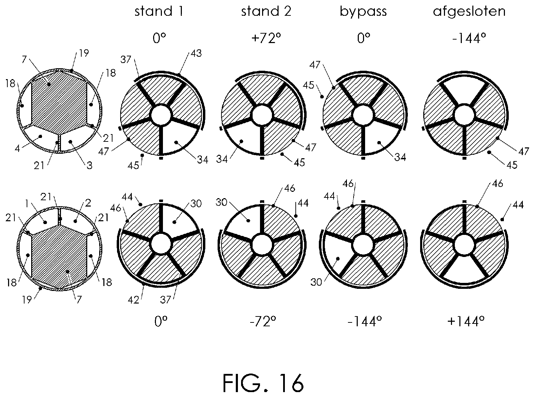

Figure 16 shows in the same way as figure 15 the second embodiment in all positions. This is a variation of the first embodiment, wherein two identical valves are used in which one segment is axially open and three segments are radially open. In the first position the flow from inside to outside moves axially via open segment 30 of valve 28 to channel 2 of the recuperator and exits the recuperator via channel 4 and then radially through a port 47 of valve 29 and port 45 of the extension. The flow from outside to inside moves axially via open segment 34 of valve 29 to channel 3 of the recuperator and exits the recuperator via channel 1 radially via port 46 of valve 28 and port 44 in the extension.

In the second position valve 28 has been rotated 72° counter-clockwise relative to position 1 and valve 29 has been rotated 72° clockwise. The flow from inside to outside moves axially via open segment 30 of valve 28 to channel 1 of the recuperator and exits the recuperator through channel 3 and then radially through port 47 of valve 29 and port 45 of the extension. The flow from outside to inside moves axially via open segment 34 of valve 29 to channel 4 of the recuperator and exits the recuperator via channel 2 and radially via port 46 of valve 28 and port 44 of the extension.

In the third position valve 28 has been rotated 144° counter-clockwise relative to position 1 and valve 29 has not been rotated. The flow from inside to outside moves axially via open segment 30 of valve 28 to bypass channel 18 and exits this channel radially through port 47 of valve 29 and port 45. The flow from outside to inside moves axially via open segment 34 of valve 29 to channel 3 of the recuperator and exits the recuperator via channel 1 and radially via port 46 of valve 28 and port 44 of the extension.

In the fourth position valve 28 has been rotated 144° clockwise relative to position 1 and valve 29 has been rotated 144° counter-clockwise. The respective open segments 30 and 34 of valves 28 and 29 have been rotated in front of the closed segment of the recuperator, whereby no air flows in. Port 44 of the extension and open segment 46 of valve 28 is connected to channel 2 of the recuperator and thereby to channel 4, where the closed segment of valve 29 does not allow any connection to the outside. Port 45 of the extension of valve 29 is connected to channel 3 of the recuperator and thereby to channel 1, where the segment of valve 28 is closed. An airflow between inside and outside is hereby blocked.

The third embodiment applies when the valves are coupled or when only the recuperator is rotated. In this embodiment the valves are different, wherein valve 28 has two open radial segments and one axial segment, while valve 29 has three open radial segments and two axial segments, as shown in figure 1. In the first position the flow from inside to outside moves axially via open segment 30 of valve 28 to channel 1 of the recuperator and exits the recuperator via channel 3 and then radially through port 47 of valve 29 and port 45 of the extension. The flow from outside to inside moves axially via open segment 34 of valve 29 to channel 4 of the recuperator and exits the recuperator via channel 2 via port 46 of valve 28 and port 44 of the extension.

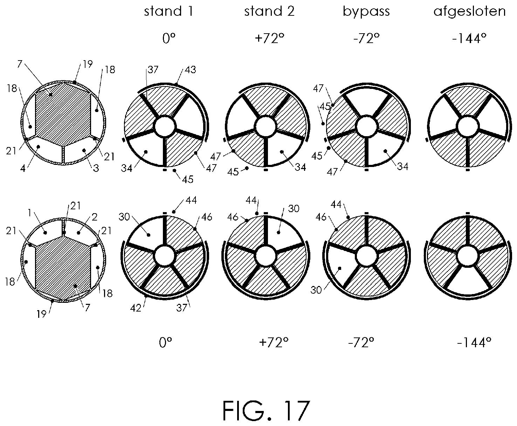

In the second position valve 28 has been rotated 72° clockwise relative to the first position and valve 29 is coupled so that it has also been rotated 72° clockwise, as shown in figure 17. The flow from inside to outside moves axially via open segment 30 of valve 28 to channel 2 of the recuperator and exits the recuperator via channel 4 and radially via port 47 of valve 29 and port 45 of the extension. The flow from outside to inside moves axially via open segment 34 of valve 29 to channel 3 of the recuperator and exits the recuperator via channel 1 and radially via port 46 of valve 28 and port 44 of the extension.

In the third position valve 28 has been rotated 72° counter-clockwise relative to the first position and valve 29 has also been rotated 72° counter-clockwise. The flow from inside to outside moves axially via open segment 30 of valve 28 to the left-hand bypass channel 18 of the recuperator and exits this bypass channel radially through port 47 of valve 29 and port 45. The flow from outside to inside moves axially via open segment 34 of valve 29 to channel 3 of the recuperator and exits the recuperator via channel 1 and radially via port 46 of valve 28 and port 44 of the extension.

In the fourth position, the closed position, valve 28 has been rotated 144° counter-clockwise relative to the first position, and valve 29 has also been rotated 144° counter-clockwise. Open segment 30 of valve 28 has been rotated in front of the closed segment of the recuperator, whereby no air flows in. Open segments 46 of valve 28 do not connect to ports in the extension of the housing. The open radial segments 47 of valve 29 are only connected to channels 3 and 4 of the recuperator and thereby to channels 1 and 2, which connect to closed radial segments of valve 28. An airflow between inside and outside is hereby blocked.

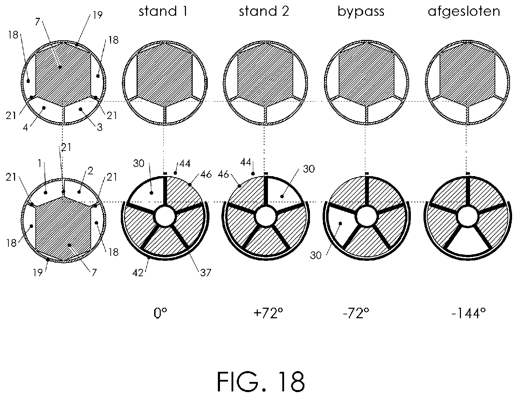

The fourth embodiment applies when one valve is used, or when only the recuperator is rotated. In this embodiment valve 28 has two open radial segments, as shown in figure 18. In the first position the flow from inside to outside moves axially via open segment 30 of valve 28 to channel 1 of the recuperator and exits the recuperator via channel 3. The flow from outside to inside moves via channel 4 of the recuperator and exits the recuperator via channel 2 via port 46 of valve 28 and port 44 of the extension.

In the second position valve 28 has been rotated 72° clockwise relative to the first position, as shown in figure 18. The flow from inside to outside moves axially via open segment 30 of valve 28 to channel 2 of the recuperator and exits the recuperator via channel 4. The flow from outside to inside moves via channel 3 of the recuperator and exits the recuperator via channel 1 and radially via port 46 of valve 28 and port 44 of the extension.

In the third position valve 28 has been rotated 72° counter-clockwise relative to the first position. The flow from inside to outside moves axially via open segment 30 of valve 28 to the left-hand bypass channel 18 of the recuperator. The flow from outside to inside moves via channel 3 of the recuperator and exits the recuperator via channel 1 and radially via port 46 of valve 28 and port 44 of the extension.

In position 4, the closed position, valve 28 has been rotated 144° counter-clockwise relative to the first position. Open segment 30 of valve 28 is rotated in front of the closed segment of the recuperator, whereby no air flows in. Open segments 46 of valve 28 do not connect to ports in the extension of the housing. An airflow between inside and outside is hereby blocked.

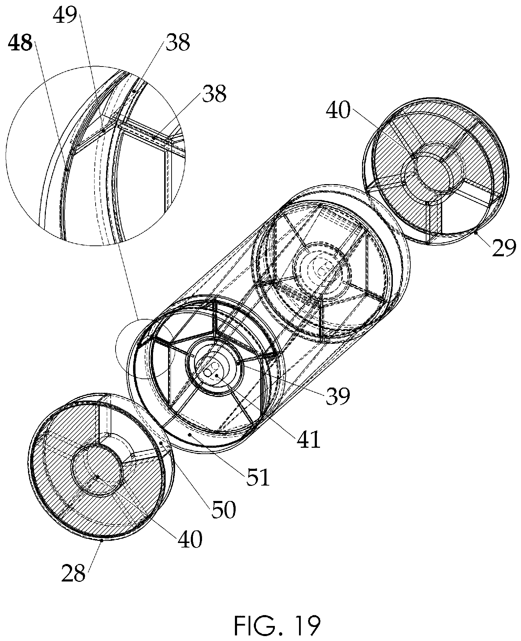

As is the case with seal 38 of the valves with axial-axial operation, a seal 38 can, in the case of the valves with axial-radial operation, be arranged on the cover of the recuperator with the same cam mechanism in order to lift the valve slightly during rotation so that friction is avoided. An O-ring 48 can then also be arranged on the other side of the valve for the purpose of the seal on the tube, as shown in figure 19. For the seal of the valve on the periphery of the tube, between the ports, it suffices for the two parts to be produced with sufficient precision. If valve and tube are insufficiently round, the fit can be made slightly conical 50, 51. Should this still result in too much leakage, an O-ring-like seal 49 can then be arranged in axial direction between the ports. This seal is also released during rotation by lifting the valve sufficiently in axial direction using the proposed cam mechanism.

Application in window frames has the advantage that the recuperator can already be arranged in the window frame factory and need no longer be installed on site. Nor does a hole need to be drilled, as in the solution through the wall. In addition to replacing an old frame with a frame provided with a recuperator, as will take place mainly in larger renovations, it is also possible to place a casing with recuperator at the location where fan gratings are now placed (usually above the windows).

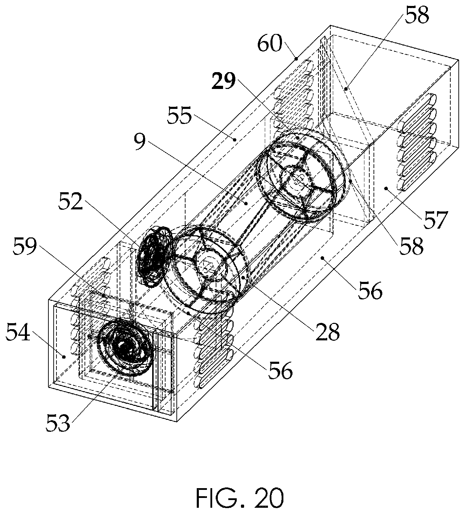

Since the width of window frames is usually the largest dimension, the recuperator is preferably also placed in the width direction, wherein according to the invention the plates of the recuperator are placed perpendicularly of the contact surface and the stacking direction is substantially in the same direction as the longitudinal direction of the tube in which it is placed. The supply and discharge ducts extend over the recuperator perpendicularly of the plates and run in cross-sectional area substantially proportionally to the distance to the end of the channel. The plates in the recuperator are preferably connected to each other in each case with the same translation, so that an oblique stack results with the same angle as the intended supply ducts.
It is attractive to also provide these recuperators with enthalpy valves 28, 29 and radial ports 44, 45, 46, 47. The same valves can be applied here as in the initially described recuperator for wall mounting. The first embodiment is recommended, wherein the number of radial ports on both sides of the recuperator amounts to two, the two ports lie adjacently of each other and are rotated through 180° relative to each other so that, by rotating the recuperator through 90°, it falls within a rectangle, the shortest side of which is equal to the diameter of valves, whereby frame casing 60 can be given a compact construction. Figure 20 shows an arrangement in a frame casing above the window.

The enthalpy valve with axial and radial inflow and outflow according to the first embodiment is applied here, although other embodiments are also possible. The fan for the supply of fresh air 52 is placed on the inner side, as is the fan for discharge 53. This prevents clogging of the fan at temperatures far below freezing point by snow formed from condensate. The supply duct for fresh air to space 55 is provided with sound-damping material. The discharge duct for indoor air 54 has an angle and is provided with sound-damping material. A filter 58 is arranged in the supply duct for outside air 57 in order to exclude contaminants from outside. The discharge duct for outside air 56 can be provided with sound-damping material.

The air which leaves the recuperator enters the discharge duct with a velocity component perpendicular to the main flow in this channel. This results in a concentration of the airflow at the wall of the channel. The high velocity gradient at the wall results in an additional pressure drop relative to that in the supply duct, where the flow is divided almost logarithmically over the cross-section. The amount of air flowing through the recuperator channels is distributed unevenly because of this asymmetric pressure distribution. An ideal recuperator has to have a uniform distribution of the flow through the channels, since the effectiveness would otherwise decrease.

In order to convert the velocity component toward the wall to a component in the main flow direction in the discharge duct it is recommended to apply vanes (61) at the beginning and end of plates 9 of recuperator 7. The flow is hereby deflected, whereby the velocity component in the main flow direction is greater than that toward the wall of the discharge duct.

Although the vanes at the inflow are less important than at the outflow, they are however important when the flow is reversed, since inflow then becomes outflow. In addition to the vanes at the beginning and end of the recuperator plates, guide vanes can also be placed in the inflow and outflow channels, whereby the pressure drop is distributed more uniformly over the length of the channels.

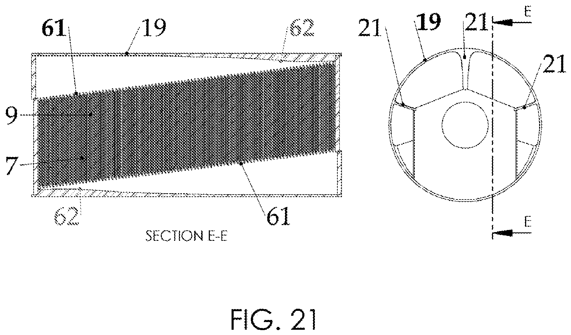

In inflow channels 1, 4 the axial impulse of the air is converted to dynamic pressure during inflow into heat-exchanging channels 5, 6. In the case of outflow channels 2, 3 the air from heat-exchanging channels 5, 6 has to be accelerated in axial direction, for which purpose the dynamic pressure is used. The overall pressure drop in outflow channels 2, 3 hereby becomes greater than that in inflow channels 1, 4. This difference in pressure drop causes a non-uniform flow through heat-exchanging channels 5, 6. The difference can be compensated to a significant extent not only by having the hydraulic diameter of channels 1, 2, 3, 4 vary in linear manner, but also by having the diameter decrease more sharply along the distance to the zero point. In figure 21 this is shown with reference to a cross-section of the tube and the recuperator. In the narrow part of supply and discharge ducts 1, 2, 3, 4 the wall of tube 19 is provided with a thickened portion 62, whereby the speed and the dynamic pressure of the medium increase locally so that the pressure drop over heat-exchanging channels 5, 6 becomes more uniform along the length of the recuperator, the flow through these channels comes more equal and the effectiveness of the recuperator increases. The same effect can be obtained by providing the stack of plates with a corresponding form.

Moistening of the plates is important for a good operation of the enthalpy recuperation and for the purpose of forming condensation when it becomes too humid indoors. This prevents droplets partially or wholly blocking a channel. The pressure drop due to condensate is hereby limited and the condensate is discharged better under the influence of gravitational force. A plastic such as impact-resistant polystyrene is preferably used for the recuperator plates. The surface tension of most plastics is high, so that drops adhering to the surface are formed. Mechanical surface roughening only provides for a small decrease in the surface tension and is difficult to apply in the required fine roughness. The roughness usually disappears wholly or partially during the subsequent thermoforming. In order to obtain the desired nanostructure the surface is preferably treated with a PCVD process, wherein SiO₂ is applied in a layer thickness of between 10 and 100 nm. Because the PCVD process takes place in a vacuum chamber the plasma can cover the whole channel, which would not be possible atmospherically. The thus formed very thin, oriented SiO₂ layer is very hydrophilic, so that a water droplet is quickly spread over the surface. In the case of condensation a water layer is formed which has a maximum thickness in the order of 100 µm and which flows out of the recuperator under the influence of gravitational force. Tests show that pressure drop, which doubles in the case of untreated material, now increases by only -15%. In the enthalpy position not a droplet escapes, and all the condensation evaporates in the subsequent cycle. The switching time of the enthalpy cycle can be increased owing to the better moistening, which reduces the virtual leakage during switching.

The structure of the SiO₂ layer is such that water vapour is also adsorbed on the wall below the condensation temperature, whereby the enthalpy transfer is increased. It is also possible to make use of materials other than SiO₂.

## Claims

1. Recuperator (7), comprising:
- at least a first recuperator unit with heat-exchanging channels (5, 6) extending parallel to each other;
- a first header (63) placed on a first side of the recuperator unit and having a triangular cross-section, one surface of which connects to a first end of the heat-exchanging channels (5, 6) of the recuperator unit;
- a second header (64)
placed on the second side of the recuperator unit and having a triangular cross-section, one surface of which connects to the second side of the heat-exchanging channels (5, 6) of the recuperator unit;
- supply ducts (1, 4) extending to a second surface of the first and the second header; and
- discharge ducts (2, 3) extending from the third surface of the first and the second header,
- wherein the supply ducts (1, 4) and the discharge ducts (2, 3) extend transversely to the longitudinal direction of the heat-exchanging channels (5, 6), **characterized in that**
- the supply (1, 4) and the discharge ducts (2, 3) extend at the sides of the headers (63, 64) lying opposite the recuperator units,
- the passage of the supply ducts (1, 4) decreases in the flow direction, and
- the passage of the discharge ducts (2, 3) increases in the flow direction.

2. Recuperator as claimed in claim 1, **characterized in that** the supply ducts and the discharge ducts extend substantially parallel to the intersecting line between the first and the second surface of the headers.

3. Recuperator as claimed in claim 1, **characterized in that** the supply ducts and the discharge ducts extend substantially transversely of the intersecting line between the second and the third surface of the headers.

4. Recuperator as claimed in claim 3, **characterized in that** the recuperator is provided with at least a second recuperator unit.

5. Recuperator as claimed in any of the claims 1-4, **characterized in that** the recuperator is placed in a rectangular housing.

6. Recuperator as claimed in claim 1, **characterized in that**
- the recuperator unit has a round form and extends between two concentric cylinders,
- the channels extend radially relative to the cylinders,
- the first header is situated on the inner side of the recuperator unit,
- the second header is situated on the outer side of the recuperator unit,
- the supply and discharge ducts extend in the axial direction of the cylinders,
- one supply duct and one discharge duct extend on the inner side of the recuperator unit, and
- one supply duct and one discharge duct extend on the outer side of the recuperator unit.

7. Recuperator as claimed in claim 6, **characterized in that** a substantially tubular distributor is arranged between the central supply duct and discharge duct on the one hand and the heat-exchanging channels on the other, which distributor is divided into sections by means of internal extensions of walls extending between the heat-exchanging channels, and that each of the sections is connected to the discharge duct or to the supply duct, and that a substantially tubular distributor is arranged between the supply duct and discharge duct arranged on the periphery on the one hand and the heat-exchanging channels on the other, which distributor is divided into sections by means of extensions of walls extending between the heat-exchanging channels, and that each of the sections is connected to the discharge duct or supply duct arranged on the periphery.

8. Recuperator as claimed in any of the foregoing claims, **characterized in that** the recuperator unit is provided with plates which extend parallel to each other and which separate channels of different sort and extend transversely of the intersecting line between the second and the third surface of the headers and that at least some of the number of plates are provided with a profile which defines channels.

9. Recuperator as claimed in claim 1, 2, 3, 4 or 6, **characterized in that** the recuperator is placed in a housing with the form of a straight circular cylinder and that the central axis of the recuperator unit extends at an angle to the axis of the cylindrical housing.

10. Recuperator as claimed in claim 6 or 9, **characterized in that** a controllable alternating valve is arranged against both end walls of the housing on either side of the recuperator unit and connected for repetitively and simultaneously alternating the inlet channel and the outlet channel, and that the recuperator is a recuperator configured to recover latent heat.

11. Recuperator as claimed in claim 10, **characterized in that** the alternating valves are both provided with a fixedly arranged valve seat provided with openings, which openings are connected to a supply duct or discharge duct, and with a rotatable valve disc connecting to the valve seat and provided with openings and that at least one bypass channel is arranged in the housing and that the bypass channel is connected to openings arranged in both valve seats.

12. Recuperator as claimed in claim 11, **characterized in that** the valve seats are provided with closed parts and that the valve discs are movable into a position in which the openings in the valve discs are closed by closed parts of the valve seat.

13. Recuperator as claimed in claim 11, or 12, **characterized in that** the valve discs are movable in axial direction and that the recuperator is provided with a control member configured to move the valve in axial direction away from the valve seat prior to a change in the position of the valve and to move the valve toward the valve seat after a change in the position of the valve.

14. Recuperator as claimed in claim 11, 12 or 13, **characterized in that** the rotatable valves are provided with an outward extending, substantially cylinder jacket-like wall part which connects to the valve disc and is co-rotatable with the valve disc, that the valve seats are each connected to a substantially cylinder jacket-like fixed wall part which is in contact with the associated rotatable wall part, that in both wall parts openings are arranged which, depending on the position of the valve disc, can be brought into overlap and that the openings arranged in the fixed wall part are connectable to the surrounding area or to the indoor space and that the substantially cylinder jacket-like parts of the rotatable valves and the parts of the housing connecting thereto take a slightly conical form.

15. Recuperator as claimed in any of the foregoing claims, **characterized in that** the plates are provided with guide means for guiding the change in direction of the airflows entering and exiting the channels.

## Patentansprüche

1. Rekuperator (7), umfassend:
- mindestens eine erste Rekuperatoreinheit mit Wärmetauscherkanälen (5, 6), die sich parallel zueinander erstrecken;
- einen ersten Sammler (63), der an einer ersten Seite der Rekuperatoreinheit angeordnet ist und einen dreieckigen Querschnitt hat, wobei eine Oberfläche davon sich mit einem ersten Ende der Wärmetauscherkanäle (5, 6) der Rekuperatoreinheit verbindet;
- einen zweiten Sammler (64), der auf einer zweiten Seite der Rekuperatoreinheit angeordnet ist und einen dreieckigen Querschnitt hat, wobei eine Oberfläche davon sich mit der zweiten Seite der Wärmetauscherkanäle (5, 6) der Rekuperatoreinheit verbindet;
- Zuflussleitungen (1, 4), die sich zu einer zweiten Oberfläche des ersten und des zweiten Sammlers erstrecken; und
- Abflussleitungen (2, 3), die sich von der dritten Oberfläche des ersten und des zweiten Sammlers erstrecken;
- wobei die Zuflussleitungen (1,4) und die Abflussleitungen (2, 3) sich quer zu der Längs-richtung der Wärmetauscherkanäle (5, 6) erstrecken;
**dadurch gekennzeichnet, dass**
- die Zuflussleitungen (1, 4) und die Abflussleitungen (2, 3) sich an den Seiten der Sammler (63, 64) erstrecken, die den Rekuperatoreinheiten gegenüber liegen,
- der Durchgang der Zuflussleitungen (1, 4) in der Strömungsrichtung abnimmt, und
- der Durchgang der Abflussleitungen (2, 3) in der Strömungsrichtung zunimmt.

2. Rekuperator nach Anspruch 1, **dadurch gekennzeichnet, dass** die Zuflussleitungen und die Abflussleitungen sich im Wesentlichen parallel zu der Schnittlinie zwischen der ersten und der zweiten Oberfläche der Sammler erstrecken.

3. Rekuperator nach Anspruch 1, **dadurch gekennzeichnet, dass** die Zuflussleitungen und die Abflussleitungen sich im Wesentlichen quer zu der Schnittlinie zwischen der zweiten und der dritten Oberfläche der Sammler erstrecken.

4. Rekuperator nach Anspruch 3, **dadurch gekennzeichnet, dass** der Rekuperator mit mindestens einer zweiten Rekuperatoreinheit ausgestattet ist.

5. Rekuperator nach einem der Ansprüche 1 bis 4, **dadurch gekennzeichnet, dass** der Rekuperator in einem rechteckigen Gehäuse platziert ist.

6. Rekuperator nach Anspruch 1, **dadurch gekennzeichnet, dass**
- die Rekuperatoreinheit eine runde Form aufweist und sich zwischen zwei konzentrischen Zylindern erstreckt,
- die Kanäle sich radial relativ zu den Zylindern erstrecken,
- der erste Sammler sich an der Innenseite der Rekuperatoreinheit befindet,
- der zweite Sammler sich an der Außenseite der Rekuperatoreinheit befindet,
- die Zufluss- und Abflussleitungen sich in der axialen Richtung der Zylinder erstrecken,
- eine Zuflussleitung und eine Abflussleitung sich auf der Innenseite der Rekuperatoreinheit erstrecken, und
- eine Zuflussleitung und eine Abflussleitung sich auf der Außenseite der Rekuperatoreinheit erstrecken.

7. Rekuperator nach Anspruch 6, **dadurch gekennzeichnet, dass** ein im Wesentlichen rohrförmiger Verteiler zwischen der zentralen Zuflussleitung und Abflussleitung auf der einen Seite und den Wärmetauscherkanälen auf der anderen Seite angeordnet ist, wobei der Verteiler mittels interner Fortsätze der Wände, die sich zwischen den Wärmetauscherkanälen erstrecken, in Abschnitte unterteilt ist, und dass jeder der Abschnitte mit der Abflussleitung oder der Zuflussleitung verbunden ist, und dass ein im Wesentlichen rohrförmiger Verteiler zwischen der Zuflussleitung und der Abflussleitung, die auf der Peripherie auf einer Seite angeordnet sind, und den Wärmetauscherkanälen auf der anderen Seite angeordnet ist, wobei der Verteiler mittels Fortsätzen der Wände, die sich zwischen den Wärmetauscherkanälen erstrecken, in Abschnitte unterteilt ist, und dass jeder der Abschnitte mit der Abflussleitung oder Zuflussleitung verbunden ist, die an der Peripherie angeordnet sind.

8. Rekuperator nach einem der vorhergehenden Ansprüche, **dadurch gekennzeichnet, dass** die Reku-peratoreinheit mit Platten ausgestattet ist, die sich parallel zueinander erstrecken und die Kanäle von unterschiedlicher Art trennen und sich quer zu der Schnittlinie zwischen der zweiten und der dritten Oberfläche der Sammler erstrecken, und dass mindestens einige von der Anzahl der Platten mit einem Profil ausgestattet sind, welches Kanäle definiert.

9. Rekuperator nach Anspruch 1, 2, 3, 4 oder 6, **dadurch gekennzeichnet, dass** der Rekuperator in einem Gehäuse mit der Form eines geraden runden Zylinders platziert ist, und dass sich die Mittelachse der Rekuperatoreinheit in einem Winkel zu der Achse des zylindrischen Gehäuses erstreckt.

10. Rekuperator nach Anspruch 6 oder 9, **dadurch gekennzeichnet, dass** ein steuerbares Wechselventil gegen beide Endwände des Gehäuses an jeder Seite der Rekuperatoreinheit angeordnet und zum wiederholten und simultanen Abwechseln des Einlasskanals und des Auslasskanals verbunden ist, und dass der Rekuperator ein Rekuperator ist, der ausgestaltet ist, um Latentwärme zurückzugewinnen.

11. Rekuperator nach Anspruch 10, **dadurch gekennzeichnet, dass** die Wechselventile beide mit einem fest angeordneten Ventilsitz ausgestattet ist, der mit Öffnungen ausgestattet ist, wobei die Öffnungen mit einer Zuflussleitung oder Abflussleitung verbunden sind, und mit einem drehbaren Ventilteller, der sich mit dem Ventilsitz verbindet und mit Öffnungen ausgestattet ist, und dass mindestens ein Umgehungskanal in dem Gehäuse angeordnet ist, und dass der Umgehungskanal mit Öffnungen verbunden ist, die in beiden Ventilsitzen angeordnet sind.

12. Rekuperator nach Anspruch 11, **dadurch gekennzeichnet, dass** die Ventilsitze mit geschlossenen Teilen ausgestattet sind, und dass die Ventilteller in eine Position bewegbar sind, in der die Öffnungen in den Ventiltellern durch geschlossene Teile des Ventilsitzes geschlossen sind.

13. Rekuperator nach Anspruch 11 oder 12, **dadurch gekennzeichnet, dass** die Ventilteller in axialer Richtung beweglich sind, und dass der Rekuperator mit einem Steuerelement ausgestattet ist, das ausgestaltet ist, um das Ventil vor einer Änderung in der Position des Ventils in axialer Richtung weg von dem Ventilsitz zu bewegen und das Ventil nach einer Änderung in der Position des Ventils in Richtung des Ventilsitzes zu bewegen.

14. Rekuperator nach Anspruch 11, 12 oder 13, **dadurch gekennzeichnet, dass** die drehbaren Ventile mit einem sich auswärts erstreckenden, im Wesentlichen zylindermantelartigen Wandteil ausgestattet sind, das sich mit dem Ventilteller verbindet und gemeinsam mit dem Ventilteller drehbar ist, dass die Ventilsitze jeweils mit einem im Wesentlichen zylindermantelartigen festen Wandteil verbunden sind, das in Kontakt mit dem dazugehörigen drehbaren Wandteil ist, dass in beiden Wandteilen Öffnungen angeordnet sind, die in Abhängigkeit von der Position des Ventiltellers in Überlappung gebracht werden können, und dass die Öffnungen, die in dem festen Wandteil angeordnet sind, mit dem Umgebungsbereich oder dem Innenraum verbunden werden können, und dass die im Wesentlichen zylindermantelartigen Teile der drehbaren Ventile und die sich damit verbindenden Teile des Gehäuses eine leicht konische Form annehmen.

15. Rekuperator nach einem der vorhergehenden Ansprüche, **dadurch gekennzeichnet, dass** die Platten mit Führungsmitteln zum Führen der Richtungsänderung der Luftströme ausgestattet sind, die in die Kanäle eintreten und sie verlassen.

## Revendications

1. Récupérateur (7), comprenant :
au moins une première unité récupérateur avec des canaux d'échange thermique (5, 6) s'étendant parallèlement l'un à l'autre ;
un premier collecteur (63) placé sur un premier côté de l'unité récupérateur et ayant une section transversale triangulaire, dont une surface est reliée à une première extrémité des canaux d'échange thermique (5, 6) de l'unité récupérateur ;
un second collecteur (64) placé sur le second côté de l'unité récupérateur et ayant une section transversale triangulaire, dont une surface est reliée au second côté des canaux d'échange thermique (5, 6) de l'unité récupérateur ;
des conduits d'amenée (1, 4) s'étendant jusqu'à une deuxième surface des premier et second collecteurs ; et
des conduits d'évacuation (2, 3) s'étendant depuis la troisième surface du premier et du second collecteur,
les conduits d'amenée (1, 4) et les conduits d'évacuation (2, 3) s'étendant transversalement à la direction longitudinale des canaux d'échange thermique (5, 6),
**caractérisé en ce que**
les conduits d'amenée (1, 4) et d'évacuation (2, 3) s'étendent sur les côtés des collecteurs (63, 64) situés à l'opposé des unités récupérateurs,
le passage des conduits d'amenée (1, 4) diminuant dans le sens de l'écoulement, et
le passage des conduits d'évacuation (2, 3) augmentant dans le sens de l'écoulement.

2. Récupérateur selon la revendication 1, **caractérisé en ce que** les conduits d'amenée et les conduits d'évacuation s'étendent sensiblement parallèlement à la ligne d'intersection entre la première et la deuxième surface des collecteurs.

3. Récupérateur selon la revendication 1, **caractérisé en ce que** les conduits d'amenée et les conduits d'évacuation s'étendent sensiblement transversalement à la ligne d'intersection entre la deuxième et la troisième surface des collecteurs.

4. Récupérateur selon la revendication 3, **caractérisé en ce que** le récupérateur comprend au moins une seconde unité récupérateur.

5. Récupérateur selon l'une quelconque des revendications 1 à 4, **caractérisé en ce que** le récupérateur est placé dans un boîtier rectangulaire.

6. Récupérateur selon la revendication 1, **caractérisé en ce que**
le récupérateur a une forme ronde et s'étend entre deux cylindres concentriques,
les canaux s'étendent radialement par rapport aux cylindres,
le premier collecteur est situé sur le côté intérieur de l'unité récupérateur,
le second collecteur est situé sur le côté extérieur de l'unité récupérateur,
les conduits d'amenée et d'évacuation s'étendent dans la direction axiale des cylindres,
un conduit d'amenée et un conduit d'évacuation s'étendent sur le côté intérieur de l'unité récupérateur, et
un conduit d'amenée et un conduit d'évacuation s'étendent sur le côté extérieur de l'unité récupérateur.

7. Récupérateur selon la revendication 6, **caractérisé en ce qu'un** distributeur sensiblement tubulaire est disposé entre le conduit d'amenée central et le conduit d'évacuation d'une part et les canaux d'échange thermique d'autre part, ledit distributeur étant divisé en sections au moyen de prolongements internes de parois s'étendant entre les canaux d'échange thermique, et **en ce que** chacune des sections est reliée au conduit d'évacuation ou au conduit d'amenée, et **en ce qu'**un distributeur sensiblement tubulaire est disposé entre le conduit d'amenée et le conduit d'évacuation disposé sur la périphérie, d'une part, et les canaux d'échange thermique, d'autre part, ledit distributeur étant divisé en sections au moyen de prolongements de parois s'étendant entre les canaux d'échange thermique, et **en ce que** chacune des sections est reliée au conduit d'évacuation ou au conduit d'amenée disposé sur la périphérie.

8. Récupérateur selon l'une quelconque des revendications précédentes, **caractérisé en ce que** l'unité récupérateur comprend des plaques qui s'étendent parallèlement les unes aux autres et qui séparent des canaux de différentes sortes et s'étendent transversalement à la ligne d'intersection entre la deuxième et la troisième surface des collecteurs et **en ce qu'**au moins une partie du nombre de plaques comprend un profil qui définit des canaux.

9. Récupérateur selon la revendication 1, 2, 3, 4 ou 6, **caractérisé en ce que** le récupérateur est placé dans un boîtier sous la forme d'un cylindre circulaire droit et **en ce que** l'axe central du récupérateur s'étend à un angle par rapport à l'axe du boîtier cylindrique.

10. Récupérateur selon la revendication 6 ou 9, **caractérisé en ce qu'une** soupape d'alternance pouvant être commandée est disposée contre les deux parois d'extrémité du boîtier de chaque côté de l'unité récupérateur et reliée pour alterner de manière répétitive et simultanée le canal d'entrée et le canal de sortie, et **en ce que** le récupérateur est un récupérateur conçu pour récupérer la chaleur latente.

11. Récupérateur selon la revendication 10, **caractérisé en ce que** les soupapes d'alternance comprennent chacune un siège de soupape disposé de façon fixe et pourvu d'ouvertures, lesdites ouvertures étant reliées à un conduit d'amenée ou d'évacuation, et un disque de soupape rotatif relié au siège de soupape et comprenant des ouvertures, et **en ce qu'**au moins un canal de dérivation est disposé dans le boîtier et **en ce que** le canal de dérivation est relié à des ouvertures disposées dans les deux sièges de soupape.

12. Récupérateur selon la revendication 11, **caractérisé en ce que** les sièges de soupape comprennent des parties fermées et **en ce que** les disques de soupape sont mobiles dans une position dans laquelle les ouvertures dans les disques de soupape sont fermées par des parties fermées du siège de soupape.

13. Récupérateur selon la revendication 11 ou 12, **caractérisé en ce que** les disques de soupape sont mobiles dans la direction axiale et **en ce que** le récupérateur comprend un élément de commande conçu pour éloigner la soupape dans la direction axiale du siège de soupape avant un changement de position de la soupape et pour déplacer la soupape vers le siège de soupape après un changement de position de la soupape.

14. Récupérateur selon la revendication 11, 12 ou 13, **caractérisé en ce que** les soupapes rotatives comprennent une partie de paroi s'étendant vers l'extérieur, sensiblement en forme de chemise de cylindre, qui est reliée au disque de soupape et peut tourner en même temps que le disque de soupape, **en ce que** les sièges de soupape sont chacun reliés à une partie de paroi fixe sensiblement en forme de chemise de cylindre qui est en contact avec la partie de paroi rotative associée, **en ce que** dans les deux parties de paroi sont pratiquées des ouvertures qui, en fonction de la position du disque de soupape, peuvent être amenées en chevauchement et **en ce que** les ouvertures pratiquées dans la partie de paroi fixe peuvent être reliées à la zone environnante ou à l'espace intérieur et **en ce que** les parties semblables aux chemises sensiblement cylindriques des soupapes rotatives et les parties du boîtier qui y sont reliées ont une forme légèrement conique.

15. Récupérateur selon l'une quelconque des revendications précédentes, **caractérisé en ce que** les plaques comprennent des moyens de guidage pour guider le changement de direction des flux d'air entrant et sortant des canaux.
